# EUROPEAN PATENT SPECIFICATION

(11) **EP 2 375 499 B1**
(45) Date of publication and mention of the grant of the patent: **31.01.2018**
(21) Application number: 11275053.4
(22) Date of filing: 29.03.2011
(51) Int. Cl.: H01Q 23/00, H04B 7/04, H04W 52/02, H01Q 3/26, H01Q 21/06, H04W 16/08, H04W 88/08

(54) **Energy-efficient active antenna arrangement**
Energieeffiziente Aktivantennenanordnung
Agencement d'antenne active éco-énergétique

(30) Priority: 29.03.2010 ES 201030464
(43) Date of publication of application: 12.10.2011
(73) Proprietor: Vodafone Group PLC, Newbury Berkshire RG14 2FN (GB); Vodafone España, S.A.U., 28108 Alcobendas (ES)
(72) Inventor: López Roman, Javier, 28050 Madrid (ES); McWilliams, Brendan, 28050 Madrid (ES); Serrano Solsana, Clara, 28050 Madrid (ES); Le Pezennec, Yannick, 28050 Madrid (ES)
(74) Representative: Boult Wade Tennant

(56) References cited:
- US-A1- 2002 103 001
- US-A1- 2007 224 951
- US-A1- 2008 268 790
- US-B1- 6 640 111

## Description

### Field of the Invention

The present invention is comprised within the field of mobile telecommunications, and more specifically in a new active antenna architecture optimized for power savings.

### Background of the Invention

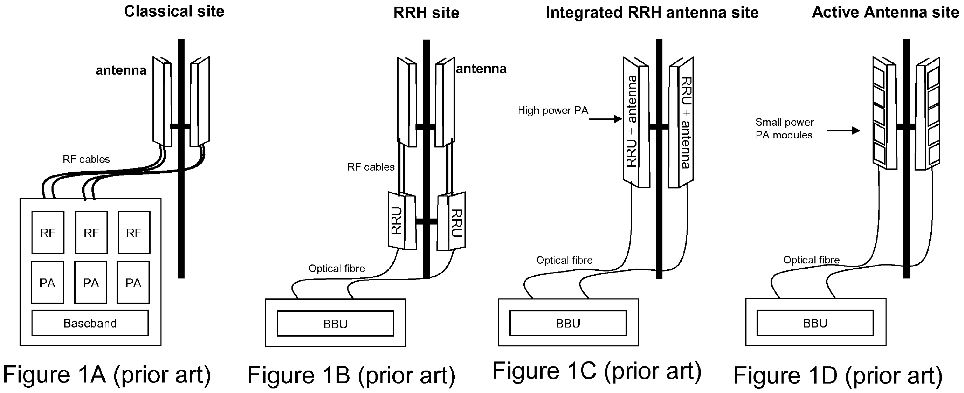

As depicted in **Figures 1A-1D****,** the architecture of the radio base stations is moving towards more efficient and simple site solutions, evolving from a site architecture with large cabinets hosting the base station (Figure 1A, classical site) to radio solutions integrated in the antenna (called active antenna, Figure 1D). Figure 1B shows an intermediate solution, remote radio head (RRH) site, the remote radio unit (RRU) being close to the antenna and connected to the baseband unit (BBU), whereas in Figure 1C the RRU is integrated into a passive antenna, integrated RRH antenna site, forming a high-power power amplifier (PA).

There are two types of active antennas: *loosely integrated* (basically an RRU integrated into a passive antenna, Fig. 1C) and *tightly integrated* (a new modular architecture optimising the integration into the antenna, Fig. 1D). In the present document the expression "active antenna" will refer only to the tightly integrated antenna based on small power modules, as shown in Figure 1D.

Active antennas use a number of transceiver (TRX) modules to transmit/receive a macro RF signal power by combining the signals synchronously over the air. While an antenna arrangement has a maximum output power, an antenna arrangement in a live network rarely if ever transmits at the maximum output power for a number of reasons:
- The traffic load is low out of peak hours (operation at high traffic load only occurs a small percentage of time e.g. 20% of time - yet the PA as a whole is itself still in operation and consuming resources regardless of what is transmitted over the air).
- One or more carriers are not used (e.g. an active antenna designed for 40W maximum output power only using 20W maximum output power as only one carrier is activated).
- Services in use are not power intensive (e.g. a cell carrying a few speech calls is typically operating far from the maximum output power).

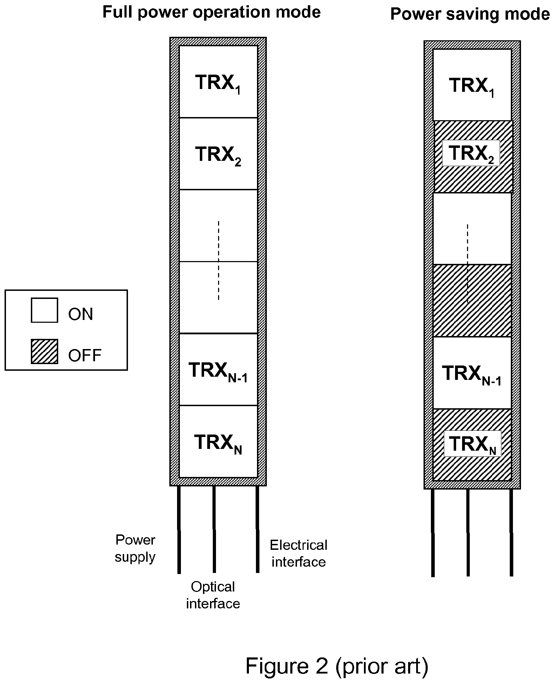

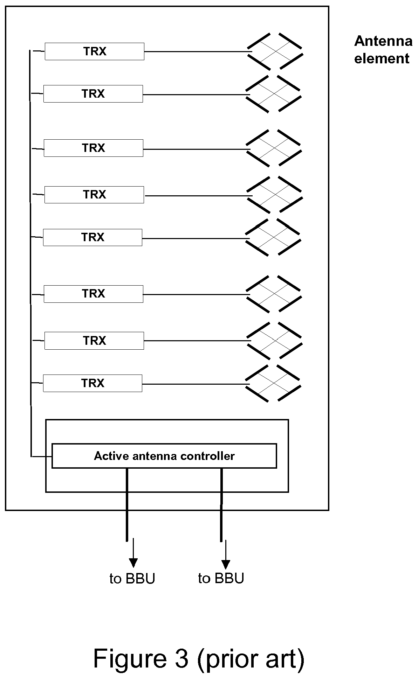

The best way to save energy (in sites using a "classical" active antenna architecture) whilst the radio network is operating is to switch off some of the TRX modules from the active antenna. **Figure 2** illustrates how the energy saving mode based on a conventional active antenna design would be achieved. **Figure 3** shows a conventional active antenna architecture, comprising TRX modules connected to antenna elements and controlled by the active antenna controller, which can switch on or switch off each TRX module.

The problem of such types of solution is that switching off TRX modules not only reduces the overall maximum output power available but also affects the radiation pattern of the antenna (e.g. azimuth and downtilt) hence instantaneously modifying the coverage. In other words when switching off modules in order to save power, there is a high risk that this affects the key performance indicators (KPIs) of the live network (e.g. increased dropped call, blocked calls).

US 6,640,111 discloses a novel base station for cellular wireless communications based on a modular structure. The modular cellular wireless communication base station includes a plurality of active radiator modules (ARM's) located at a desired antenna location, a beam forming network controlling relative amplitudes and phases of each of the modules and an RF front end. Each module includes at least one antenna for transmitting and receiving, a transmitter having a power amplifier, and a receiver.

US 2008/268790 discloses an antenna system which may include a reconfigurable array antenna system including a plurality of elements each capable of radiating and receiving electromagnetic energy. The antenna system may also include an electronically reconfigurable power management and control system to selectively power each of the plurality of elements to generate a desired beam pattern.

US 2007/224951 discloses a radio frequency (RF) transmitter that has a plurality of digitally controlled phased array antennas coupled to and controlled by the processor to transmit data. The processor is to enable one or more antennas to be turned off during a use of the apparatus to reduce a power consumption of the apparatus.

US 2002/103001 discloses an apparatus for wireless communication, including a plurality of slave transceivers spatially separated from one another within an enclosed region. Each of the slave transceivers is adapted to receive a reverse radio frequency (RF) signal generated by a mobile transceiver within the region. Furthermore, each slave transceiver processes the RF signal based on at least one adjustable operational parameter and generates a reverse slave signal. Each of the slave transceivers includes an associated slave central processing unit adapted to control at least one adjustable operational parameter of the slave transceiver. Control is provided in response to at least one characteristic of the reverse RF signal. The apparatus also includes a master transceiver. The master transceiver is coupled to receive and process the reverse slave signals from the plurality of slave transceivers. Corresponding reverse master signals are then generated by the slave transceiver. The slave transceiver conveys the reverse master signals to at least one base station transceiver subsystems external to the region. The master transceiver is adapted to convey setting signals to the plurality of slave transceivers so as to set the adjustable operational parameters thereof.

It is well-known that abbreviations and acronyms are frequently used in the mobile telephony field. Below is a glossary of acronyms/terms used throughout the present specification:
- BBU: BaseBand Unit
- LTE: Long Term Evolution
- OPEX: Operating Expenses
- PA: Power Amplifier
- RRH: Remote Radio Head
- RRU: Remote Radio Unit
- TRX: Transceiver

### Description of the Invention

According to the present invention, there is provided an active antenna arrangement according to claim 1.

The invention relates to an energy-efficient active antenna comprising a plurality of TRX modules sets and an active antenna controller for controlling the TRX module sets. Each TRX module set comprises, in turn, at least one antenna element for radiating RF signals, at least one master TRX module and at least one slave TRX module. The or each slave TRX module is operable to be switched on/off by the active antenna controller according to traffic load requirements. The active antenna arrangement is configured such that, when in use, the or each master TRX module is active and radiating at least a corresponding minimum output power, such that when the active antenna is in use the radiation pattern of the antenna substantially remains identical independently of the number of switched-off slave TRX modules.

The present invention provides an active antenna architecture which allows a substantial reduction in the power consumed by base stations used for 2G, 3G, and LTE networks (where such type of active antenna is deployed), while maintaining coverage unchanged for users in the radio network. This reduction in the power consumption will have a positive impact on the OPEX savings and also will minimise environmental impacts when operating the live networks.

The distribution of power between all the master TRX modules and all the slave TRX modules is preferably dimensioned in such a way to maximize the energy savings by improving the efficiency of operation of the master TRX modules, operating close to their maximum power, and by switching off as often as possible the slave TRX modules.

Where the active antenna arrangement is deployed for 3G transmission, the or each master TRX module is preferably arranged, when the active antenna arrangement is in use, to radiate at least the common channels, and each slave TRX module can be arranged, when switched-on, to radiate at least the same common channels or to radiate only dedicated channels.

All the master TRX modules preferably have the same maximum output power P_{M} and all the slave TRX modules preferably have the same maximum output power P_{S}.

In a preferred embodiment, each TRX module set comprises an antenna element associated with a corresponding one of the master TRX modules, and for each slave TRX module, an antenna element associated to each corresponding slave TRX module. The active antenna arrangement is configured, when in use, for:
- radiating the output signal of the master TRX module of each TRX module set over its associated antenna element;
- when a slave TRX module of a TRX module set is switched-off, radiating the output signal of the master TRX module of said TRX module set over the antenna element associated to said slave TRX module, said output signal being appropriately adjusted to maintain the radiation pattern;
- when a slave TRX module of a TRX module-is switched-on, radiating its output signal over its associated antenna element.

In this embodiment each master TRX module set can comprise:
- switching elements, controlled by the antenna controller, for appropriately routing the output signals of the master TRX module and the at least one slave TRX modules, and
- for each slave TRX module, a phase shifter and variable attenuator, controlled by the antenna controller, for adjusting the attenuation and phase shift of the output signal of the master TRX module;
- optionally, a splitter to split the output signal of the master TRX module so as to feed its associated antenna element and also to feed each antenna element associated to each slave TRX module through the corresponding phase shifter and variable attenuator.

In another preferred embodiment each TRX module set comprises one single antenna element and the active antenna arrangement is configured, when in use, for:
- when each slave TRX module of a TRX module set is switched-off, radiating the output signal of the master TRX module of said TRX module set over the antenna element of said TRX module set;
- when at least one slave TRX module of a TRX module set is switched-on, obtaining a coherent combined signal between said at least one switched-on slave TRX module and the master TRX module of said TRX module set, and radiating said combined signal over the antenna element of said TRX module set.

In this case each master TRX module- preferably comprises a coherent combiner arranged to obtain the coherent combined signal and switching elements controlled by the active antenna controller for appropriately addressing the intervening RF signals to the associated antenna element.

In yet a preferred embodiment, each TRX module is arranged to feed one single antenna element and the active antenna controller is arranged to dynamically adjust the weights and power settings of the master and slave TRX modules. The number and output power of master and slave TRX modules are dimensioned in such a way that the same radiation pattern is maintained whether the slave TRX modules are switched on or off.

All the master TRX modules and all the slave TRX modules can have more than one transmission branch, comprising more than one power amplifier and each TRX module being associated to a single antenna element.

In accordance with a further aspect of the present invention there is provided an active antenna site comprising at least one of the active antenna arrangement embodiments described above and a baseband unit connected to said active antenna arrangement.

### Brief Description of the Drawings

A series of drawings which aid in better understanding the invention and which are expressly related with an embodiment of said invention, presented as a non-limiting example thereof, are very briefly described below.
Figures 1A-1D shows the evolution of the site radio design architecture.
Figure 2 shows a TRX switch-off pattern in power saving mode for a conventional active antenna architecture, according to the prior art.
Figure 3 represents a conventional active antenna architecture, according to the state of the art.
Figure 4 shows an example of new active antenna architecture optimised for energy savings, according to the present invention, having one slave TRX module per master TRX module.
Figure 5 shows another example of new active antenna architecture according to the present invention, having two slave TRX modules per master TRX module.
Figure 6 shows a new active antenna architecture according to a first embodiment.
Figure 7 shows a new active antenna architecture according to a second embodiment.
Figure 8 shows a new active antenna architecture according to a third embodiment.

### Description of a Preferred Embodiment of the Invention

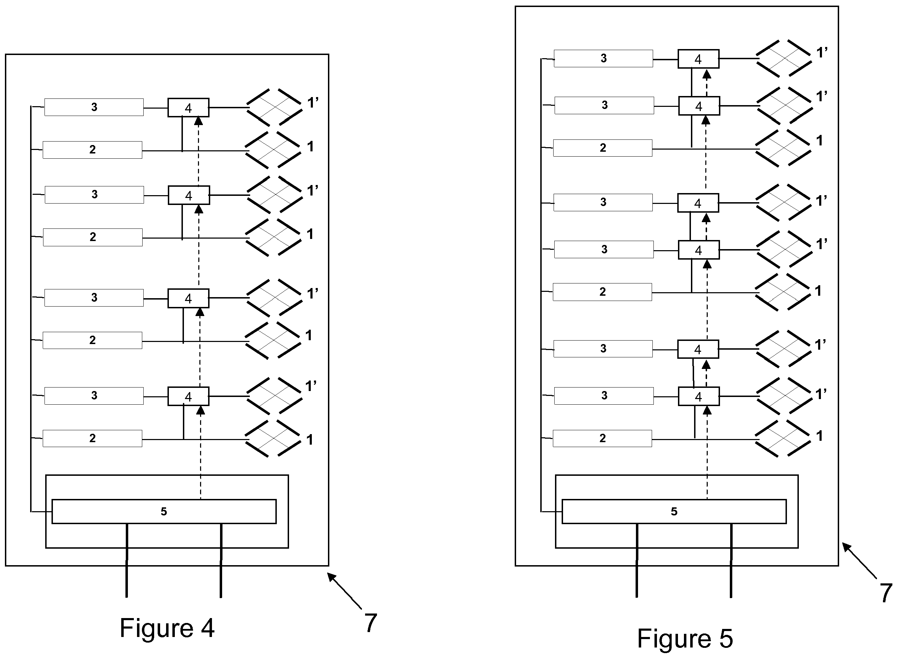

**Figures 4** and **5** illustrate a new optimised active antenna architecture design which permits the switching off of certain TRX modules whilst maintaining coverage for active users in the radio network. Figure 4 shows the new active antenna architecture optimised for energy savings according to the present invention.

In the new active antenna architecture, the active antenna 7 is made of two types of TRX modules:
- Master TRX modules 2 (or master RF modules): these are "Always-on modules", TRX modules are always active and radiate at least the minimum information required continuously (e.g. common channels in 3G and possibly a power margin for a reduced number of calls).
- Slave TRX modules 3 (slave RF modules): these, by contrast, are "On-off modules", TRX modules which can be switched off or on as a function of the traffic requirements without affecting the cell coverage (no impact on the radiation pattern of the essential information carrier over the master TRX modules).

Master 2 and slave 3 TRX modules are controlled by the active antenna controller 5. The example shown in Figure 4, there is one slave module per master module (M+S architecture), whereas in Figure 5 there are two slave modules per master module (M+2S architecture).

Distribution of total power between master and slave module is flexible (depending on active antenna design). One possible solution in order to maximise the energy savings, is that the overall power radiated by the master TRX modules 2 should be as low as possible with respect to the overall power that can be radiated by the slave TRX modules 3. For example, assuming an active antenna 7 radiating across all modules reaches an overall output power of 80W, the master RF modules 2 would radiate 20W and the remaining 60W would be radiated across slave RF modules 3, thereby permitting during off-peak traffic periods to achieve larger savings in terms of power consumption (i.e. the active antenna 7 operating like this would consume 20W instead of 80W). To perform a proper dimensioning of the active antenna 7 the power dimensioning of the master and slave modules should be a trade-off according to the targeted traffic profile. For example for urban sites the master module would have to be dimensioned in such a way that can handle a minimum of voice/data traffic in order to make sure the slave TRX modules 3 can be switched-off during off-peak periods. Another possible solution minimising the implementation complexity is to reuse the same modules for master and slave modules i.e. to use modules of similar power allowing to reduce the cost of implementation.

This approach also provides the advantage to allow optimisation of the power consumed by the master RF modules as these are expected to operate close to the maximum output power (where PA efficiency is higher).

As the traffic in the cell increases and the power required is higher, the slave modules 3 should be activated in such a way that the cell always radiates the required power accordingly to serve the instantaneous traffic load (plus in addition a security margin to make sure there is sufficient available power margin for rapid power changes). This allows the cells using such an active antenna architecture to radiate the minimum power needed all the time.

One key aspect of the new active antenna architecture is the need to ensure all the antenna elements 1 are radiating optimally in providing the minimum required channels when the slave modules 3 are switched off. All the master 2 and slave 3 TRX modules transmit the same channels whenever slave modules 3 are switched on, i.e. the same radio channels are transmitted with the required power scaling using both master TRXs and slave TRXs. It is particularly important to ensure that common channels are transmitted also on slave modules - when activated - to make sure the UE can perform correctly their channel estimation (i.e. CPICH is transmitted also from slave TRX to enable satisfying demodulation of traffic channels handled over this slave TRX).

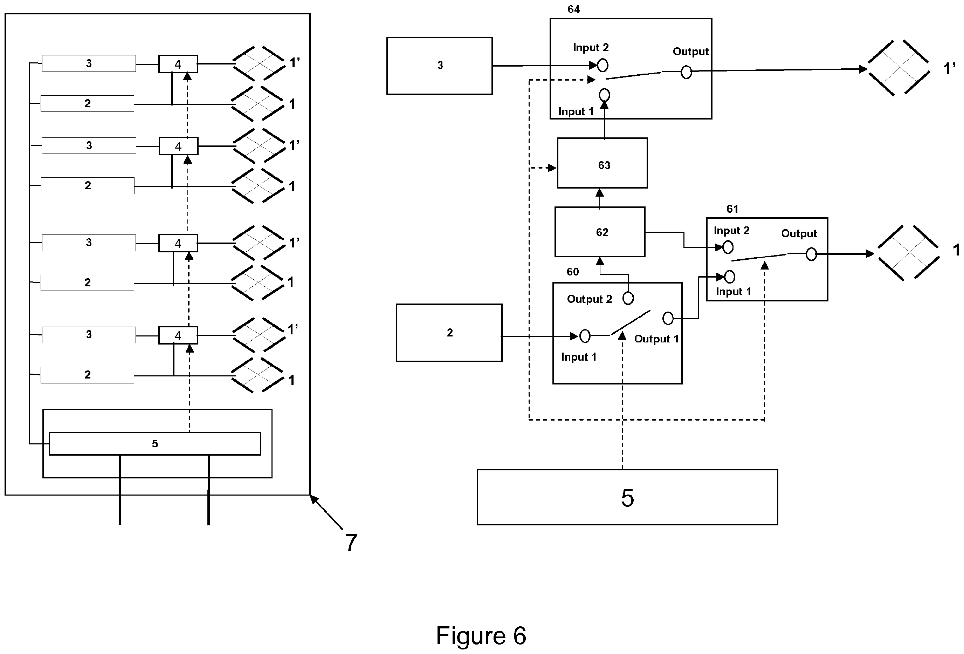

Three different architectures are represented in Figure 6, Figure 7 and Figure 8, according to different solutions or embodiments.

According to a first embodiment, shown in **Figure 6****,** a similar number of antenna elements and TRX as in the conventional active antenna are used, but with the difference that now each TRX does not feed a common antenna element 1. Instead, the master TRX module 2 feeds all the dipoles controlled by the slave TRX's under its control when the slave TRX modules are switched off. To achieve this, switching means 4 are used to allow the routing of RF output power from the master TRX 2 to the antenna elements 1 when the slave TRX modules are switched off. In this case the signal is sent through a splitter 62 to feed each antenna element 1 under master control and in addition the attenuation and phase shift of each branch is adjusted in order to keep the diagram pattern. The control of the switching elements (60,61,64) and the phase shifter and variable attenuator 63 is the responsibility of the active antenna controller 5 in charge of executing the control algorithm to activate or deactivated the slave TRX modules 3 of the active antenna 7.

When the slave TRX modules 3 are switched on, the output power from the master TRX 2 are no longer routed to all the antenna elements 1. The master TRX modules 2 are routed to the corresponding antenna element 1 and similarly the slave TRX module 3 is now routed to its corresponding antenna element 1'. To avoid any impact in terms of coverage, when switching on the slave TRX module 3, all the TRX's can be operated simultaneously as a conventional active antenna (without the master-slave hierarchy in operation any more). In this case the switching elements (60,61,64) commute to allow the direct path from the master TRX 2 to one single antenna element 1.
The logical diagram for a master 2 and slave 3 TRX's pair is shown in Figure 6. If more than one slave TRX module 3 is under the control of a master TRX 2, the slave TRX modules 3 activation should be gradual depending on the instantaneous power needs. In this case the antenna controller will select the number of slave TRX's that should be activated.

The different solutions proposed for this energy efficient active antenna architecture based on master and slave TRX modules are compatible with the support of 1 way, 2 way or 4 way Rx diversity. The support of 2 way Rx diversity is essential as this is a commonly implemented feature of current technologies in macrocellular networks (e.g. in 2G and 3G radio networks). A simple solution is to have each of the TRX module supporting 2 way Rx diversity in reception (1T2R or 2T2R TRX architecture where T is the number of Tx paths and R the number of Rx paths). In the context of this invention when referring to switching off the TRX (slave TRX modules) only the Tx path is switched off, the Rx path(s) can remain active since the biggest source of energy consumption is the Tx path (in particular power amplifier).

The support of 2 way Rx diversity is achieved using 2 antenna port element (logically the antennas associated to each TRX are antenna elements with 2 input ports i.e. 2 radiating elements which can be used for reception and transmission). For a 1T2R TRX architecture 1 duplex filter is required on the Tx/Rx port (nor required on the Rx only port). For a 2T2R TRX architecture a duplex filter is required on each Tx/Rx path).

The support of 4 way Rx diversity of interest to further enhance the uplink performance in the future. Two approaches could be taken here to achieve the support of 4 way Rx diversity:
1) Use together 2 TRX modules each one supporting 2 way Rx diversity and performing the combining in baseband to achieve 4 way Rx diversity reception. In this case 2 master TRX modules are grouped together e.g. 1 master TRX and 1 TRX slave TRX. Note that this still allows to switch off the Tx part of the slave TRX i.e. this allows to realise the energy saving benefits.
2) Use built-in 4 way Rx TRX i.e. using TRX modules based on 1T4R or 2T4R architecture. This type of solution could become useful when 4 way Rx diversity becomes deployed more widely.

MIMO is an important feature in the evolution of HSPA and also LTE, in particular MIMO 2x2 is the most typical form of MIMO with 2 antennas required at transmission (active antenna) and 2 at reception (UE) The support of MIMO can be achieved in 2 different ways:
1) Use together 2 TRX modules each of supporting only 1 single Tx path e.g. TRX modules with a 1T2R architecture. In this case the active antenna will work with groups of the 2 master TRX modules (e.g. 2 master 1T2R modules). To realise the energy saving benefits this requires to either deactivate the MIMO transmission when no MIMO user is present in the cell or dimensioning the active antennas with additional slave TRX modules.
2) Use TRX modules with MIMO support built-in e.g. TRX modules with a 2T2R TRX architecture. This is the optimum way to achieve energy savings with the energy saving active antenna architecture when using MIMO. In this approach the single antenna being typically made of 2 radiating elements (2 input ports) for the support of 2 way Rx diversity such antenna element is ready for MIMO.

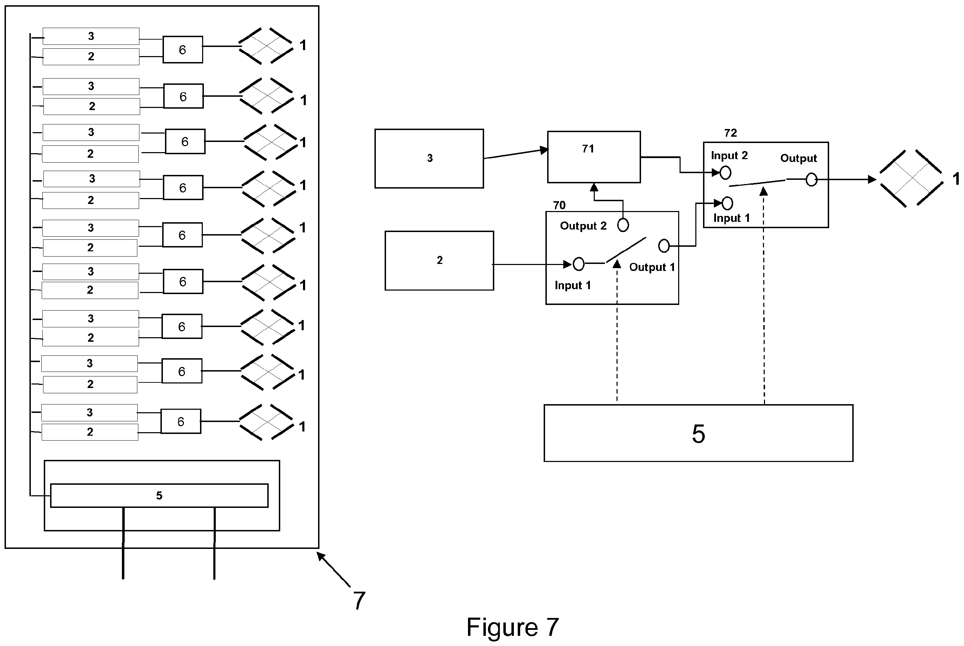

According to a second embodiment, shown in **Figure 7****,** each antenna element is fed by two TRX modules: a master TRX module 2 and a slave TRX module 3 (in fact, and according to Figure 5, there could be more than one slave TRX module 3). When both are in use, coherent combining between the slave TRX 3 and master TRX 2 is implemented in order to radiate the combined signal of both TRXs over the corresponding antenna element 1. To achieve this coherent combining means 6 are used between the TRXs modules and the antenna element 1. Description of the coherent combining means 6 are: a coherent combiner 71 which combines in phase the two inputs, and switching elements (70,72) controlled by the antenna controller 5 which avoid combiner path in case only master TRX is switched on (to avoid losses). The design of the physical elements of the coherent combining means 6 could be implemented in several ways. All physical active components should be controlled by the antenna controller, and passive components should be independent. The master TRXs 2 are always switched on thereby maintaining the same radiation pattern and radiated power for the minimum required information to be transmitted (e.g. common channels). Switching on or off the slave TRXs 3 depends on power demand at any point in time (e.g when low power is required, the slave TRXs 3 are switched off and only the master TRXs 2 feed the antenna elements 1). Alternatively when high power is required, both master 2 and slave 3 TRXs feed the antenna elements 1. The number of rows of the active antenna is flexible, it depends on antenna design. Distribution of power between master and slave is also flexible (symmetrical or asymmetrical distribution). Another embodiment could include more than one slave TRX module 3 per master module, therefore the coherent combining would be performed between all the slave modules and the master module.

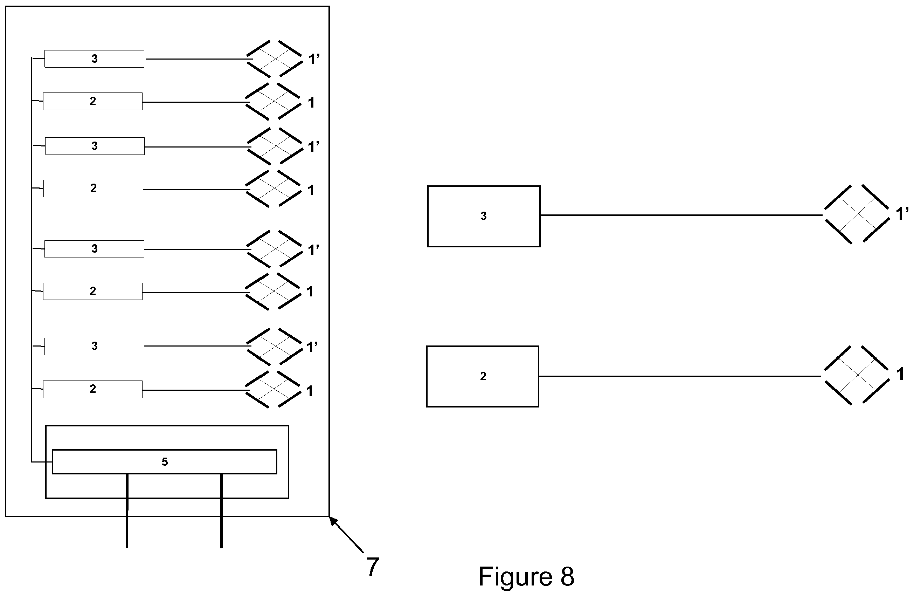

A third embodiment of the present invention, shown in **Figure 8****,** is applicable to the conventional active antenna. In this third embodiment the number of TRXs and power per TRX are dimensioned in such a way that when slave modules 3 are switched off the adequate radiation pattern is still achieved via the remaining operating TRXs. In principle it would be possible to support this solution using a conventional active antenna, however using existing modules as master and slave (same modules) e.g. 1 out of 2 TRX, could cause a big radiation pattern impact when switching off slave modules 3. To have an efficient means to implement an energy efficient antenna the conventional active antenna architecture can be reused but the number of modules has to be increased in order to be able to achieve the required minimum antenna performance when the slave TRX modules are switched-off. For example to introduce a simple master slave architecture one possibility is to double the number of modules using master slave pattern (MSMSMSMSMS) whilst still maintaining the same overall radiated output power (introducing twice more modules but each one with half power versus a conventional active antenna). Likewise the active antenna controller 5 needs to adjust the weights (to be applied on the phase and amplitude of the RF signal of the master and slave modules) of the different TRX in such a way to maintain the same coverage when switching on the slave modules. Indeed even though the extra modules could be used to improve the radiation pattern of the antenna (e.g. larger antenna gain or beamwidth) the objective here is not to improve coverage but to maintain the same one as when the slave were switched off (the extra modules are introduced to permit a more efficient power consumption), the coverage is not improved as master and slave models need to have the same footprint as essential channels such as the common pilot channel are only transmitted on the master TRX modules. The power of the master module can differ from the slave modules to optimise power savings (as opposed to the conventional active antenna where they are all identical, as shown in Figure 3).

In a preferred embodiment all the master TRX modules (2) have the same nominal output power P_{M}, whereas all the slave TRX modules (3) have the same nominal output power P_{S}.

## Claims

1. An active antenna arrangement (7), comprising a plurality of TRX module sets and an active antenna controller (5) for controlling the TRX module sets; each TRX module set comprising at least one antenna element (1,1') for radiating RF signals, **characterized in that** each TRX module set further comprises:
at least one master TRX module (2),
at least one slave TRX module (3), each one operable to be switched on/off by the active antenna controller (5) according to traffic load requirements;
the active antenna arrangement (7) being configured such that, when in use, the or each master TRX module (2) is active and radiating at least a corresponding minimum output power.

2. The active antenna arrangement (7) according to claim 1, the active antenna arrangement (7) being deployed for 3G transmission, wherein the or each master TRX module (2) is arranged, when the active antenna arrangement (7) is in use, to radiate at least the common channels, and wherein each slave TRX module (3) is arranged, when switched-on, to radiate at least the same common channels.

3. The active antenna arrangement (7) according to claim 1, the active antenna arrangement (7) being deployed for 3G transmission, wherein the or each master TRX module (2) is arranged, when the active antenna arrangement (7) is in use, to radiate at least the common channels, and wherein each slave TRX module (3) is arranged, when switched-on, to radiate only dedicated channels.

4. The active antenna arrangement (7) according to any of previous claims, wherein all master TRX modules (2) have the same maximum output power PM and all slave TRX modules (3) have the same maximum output power P_{S}.

5. The active antenna arrangement (7) according to any of claims 1 to 4, wherein each TRX module set comprises:
an antenna element (1) associated with a corresponding one of the master TRX modules (2), and
for each slave TRX module (3), an antenna element (1') associated to each corresponding slave TRX module (3);
the active antenna arrangement (7) being configured, when in use, for:
- radiating the output signal of the master TRX module (2) of each TRX module set over its associated antenna element (1);
- when a slave TRX module (3) of a TRX module set is switched-off, radiating the output signal of the master TRX module (2) of said TRX module set over the antenna element (1') associated to said slave TRX module (3), said output signal being appropriately adjusted to maintain the radiation pattern;
- when a slave TRX module (3) of a TRX module set is switched-on, radiating its output signal over its associated antenna element (1').

6. The active antenna arrangement (7) according to claim 5, each master TRX module comprising:
- switching elements (60,61,64) for appropriately routing the output signals of the master TRX module (2) and the at least one slave TRX modules (3), and
- for each slave TRX module (3), a phase shifter and variable attenuator (63) for adjusting the attenuation and phase shift of the output signal of the master TRX module (2);
said switching elements (60,61,64) and phase shifter and variable attenuator (63) being controlled by the antenna controller (5).

7. The active antenna arrangement (7) according to claim 6, each master TRX module further comprising a splitter (62) to split the output signal of the master TRX module (2) so as to feed its associated antenna element (1) and also to feed each antenna element (1') associated to each slave TRX module (3) through the corresponding phase shifter and variable attenuator (63).

8. The active antenna arrangement (7) according to any of claims 1 to 4, wherein each TRX module set comprises one single antenna element (1), the active antenna arrangement (7) being configured, when in use, for:
- when each slave TRX module (3) of a TRX module set is switched-off, radiating the output signal of the master TRX module (2) of said TRX module set over the antenna element (1) of said TRX module set;
- when at least one slave TRX module (3) of a TRX module set is switched-on, obtaining a coherent combined signal between said at least one switched-on slave TRX module (3) and the master TRX module (2) of said TRX module set, and radiating said combined signal over the antenna element (1) of said TRX module set.

9. The active antenna arrangement (7) according to claim 8, each master TRX module comprising a coherent combiner (71) arranged to obtain the coherent combined signal and switching elements (70,72) controlled by the active antenna controller (5) for appropriately addressing the intervening RF signals to the associated antenna element (1).

10. The active antenna arrangement (7) according to any of claims 1 to 4, wherein each TRX module (2,3) is arranged to feed one single antenna element (1,1'), the active antenna controller (5) being arranged to dynamically adjust the weights and power settings of the master (2) and slave (3) TRX modules.

11. An active antenna site comprising the active antenna arrangement (7) according to any of claims 1-10 and a baseband unit connected to said active antenna arrangement (7).

## Patentansprüche

1. Eine Aktivantennenanordnung (7), die eine Vielzahl von TRX-Modulsätzen und eine Aktivantennensteuereinheit (5) zur Steuerung der TRX-Modulsätze umfasst; wobei jeder TRX-Modulsatz mindestens ein Antennenelement (1, 1') zum Abstrahlen von Hochfrequenzsignalen umfasst,
**dadurch gekennzeichnet, dass** jeder TRX-Modulsatz weiter Folgendes umfasst:
mindestens ein TRX-Hauptmodul (2),
mindestens ein untergeordnetes TRX-Modul (3), wobei jedes davon zum An-/Ausschalten durch die Aktivantennensteuereinheit (5) entsprechend den Anforderungen der Verkehrsbelastung ausgelegt ist;
wobei die Aktivantennenanordnung (7) derart eingerichtet ist, dass das eine oder jedes TRX-Hauptmodul (2) unter Verwendung aktiv ist und mindestens eine entsprechende minimale Ausgangsleistung abstrahlt.

2. Die Aktivantennenanordnung (7) nach Anspruch 1, wobei die Aktivantennenanordnung (7) zur 3G-Übertragung eingesetzt wird, wobei das eine oder jedes TRX-Hauptmodul (2) eingerichtet ist, um zumindest gemeinsame Kanäle auszustrahlen, wenn die Aktivantennenanordnung (7) verwendet wird, und wobei jedes untergeordnete TRX-Modul (3) eingerichtet ist, um zumindest dieselben gemeinsamen Kanäle auszustrahlen, wenn es eingeschaltet ist.

3. Die Aktivantennenanordnung (7) nach Anspruch 1, wobei die Aktivantennenanordnung (7) zur 3G-Übertragung eingesetzt wird, wobei das eine oder jedes TRX-Hauptmodul (2) eingerichtet ist, um zumindest gemeinsame Kanäle auszustrahlen, wenn die Aktivantennenanordnung (7) verwendet wird, und wobei jedes untergeordnete TRX-Modul (3) eingerichtet ist, um nur dedizierte Kanäle auszustrahlen, wenn es eingeschaltet ist.

4. Die Aktivantennenanordnung (7) nach einem der vorhergehenden Ansprüche, wobei alle TRX-Hauptmodule (2) dieselbe maximale Ausgangsleistung PM aufweisen und alle untergeordneten TRX-Module (3) dieselbe maximale Ausgangsleistung P_{S} aufweisen.

5. Die Aktivantennenanordnung (7) nach einem der Ansprüche 1 bis 4, wobei jeder TRX-Modulsatz Folgendes umfasst:
ein Antennenelement (1), das mit einem entsprechenden TRX-Hauptmodul unter den TRX-Hauptmodulen (2) verbunden ist, und
ein Antennenelement (1'), das mit jedem entsprechenden untergeordneten TRX-Modul (3) verbunden ist, wobei dies für jedes untergeordnete TRX-Modul (3) gilt;
die Aktivantennenanordnung (7), die unter Verwendung für Folgendes eingerichtet ist:
- Ausstrahlen des Ausgangssignals des TRX-Hauptmoduls (2) eines jeden TRX-Modulsatzes über sein verbundenes Antennenelement (1);
- Ausstrahlen des Ausgangssignals des TRX-Hauptmoduls (2) eines TRX-Modulsatzes über das Antennenelement (1'), das mit einem untergeordneten TRX-Modul (3) verbunden ist, wenn das genannte untergeordnete TRX-Modul (3) des TRX-Modulsatzes ausgeschaltet ist, wobei das genannte Ausgangssignal entsprechend angepasst wird, um das Strahlungsmuster beizubehalten;
- Ausstrahlen des Ausgangssignals eines untergeordneten TRX-Moduls (3) eines TRX-Modulsatzes über sein verbundenes Antennenelement (1'), wenn das TRX-Modul eingeschaltet ist.

6. Die Aktivantennenanordnung (7) nach Anspruch 5, wobei jedes TRX-Hauptmodul Folgendes umfasst:
- Schaltelemente (60, 61, 64) für die angemessene Weiterleitung der Ausgangssignale des TRX-Hauptmoduls (2) und des mindestens einen untergeordneten TRX-Moduls (3), und
- eine Phasenverschiebungseinheit samt einer variablen Dämpfungseinheit (63) zur Anpassung der Dämpfung und Phasenverschiebung des Ausgangssignals des TRX-Hauptmoduls (2), wobei dies für jedes untergeordnete TRX-Modul (3) gilt;
wobei die genannten Schaltelemente (60, 61, 64) und die Phasenverschiebungseinheit samt der variablen Dämpfungseinheit (63) durch die Antennensteuereinheit (5) gesteuert werden.

7. Die Aktivantennenanordnung (7) nach Anspruch 6, wobei jedes TRX-Hauptmodul weiter eine Teilereinheit (62) umfasst, um das Ausgangssignal des TRX-Hauptmoduls (2) zu teilen, damit sowohl dessen verbundenes Antennenelement (1) als auch jedes Antennenelement (1'), das mit jedem untergeordneten TRX-Modul (3) verbunden ist, über die entsprechende Phasenverschiebungseinheit und die variable Dämpfungseinheit (63) eingespeist werden.

8. Die Aktivantennenanordnung (7) nach einem der Ansprüche 1 bis 4, wobei jeder TRX-Modulsatz ein einzelnes Antennenelement (1) umfasst, wobei die Aktivantennenanordnung (7) unter Verwendung für Folgendes eingerichtet ist:
- Ausstrahlen des Ausgangssignals des TRX-Hauptmoduls (2) eines TRX-Modulsatzes über das Antennenelement (1) des genannten TRX-Modulsatzes, wenn jedes untergeordnete TRX-Modul (3) eines TRX-Modulsatzes ausgeschaltet ist;
- Empfangen eines kohärenten kombinierten Signals zwischen mindestens einem eingeschalteten untergeordneten TRX-Modul (3) und dem TRX-Hauptmodul (2) eines TRX-Modulsatzes, wenn das genannte mindestens eine untergeordnete TRX-Modul (3) des genannten TRX-Modulsatzes eingeschaltet ist, und Ausstrahlen des genannten kombinierten Signals über das Antennenelement (1) des genannten TRX-Modulsatzes.

9. Die Aktivantennenanordnung (7) nach Anspruch 8, wobei jedes TRX-Hauptmodul eine kohärente Kombinationseinheit (71) umfasst, die zum Empfangen des kohärenten kombinierten Signals ausgelegt ist, und weiter Schaltelemente (70, 72) umfasst, die von der Aktivantennensteuereinheit (5) gesteuert werden und der angemessenen Adressierung der dazwischenliegenden Hochfrequenzsignale an das verbundene Antennenelement (1) dienen.

10. Die Aktivantennenanordnung (7) nach einem der Ansprüche 1 bis 4, wobei jedes TRX-Modul (2, 3) eingerichtet ist, um ein einzelnes Antennenelement (1, 1') einzuspeisen, wobei die Aktivantennensteuereinheit (5) eingerichtet ist, um das Gewicht und die Leistungseinstellungen der TRX-Hauptmodule (2) und der untergeordneten TRX-Module (3) dynamisch anzupassen.

11. Ein Aktivantennenstandort, der die Aktivantennenanordnung (7) nach einem der Ansprüche 1 bis 10 sowie eine Basisbandeinheit umfasst, die mit der genannten Aktivantennenanordnung (7) verbunden ist.

## Revendications

1. Un agencement d'antenne active (7), comprenant une pluralité d'ensembles de modules TRX et un dispositif de commande d'antenne active (5) destiné à la commande des ensembles de modules TRX, chaque ensemble de modules TRX comprenant au moins un élément d'antenne (1, 1') destiné à l'irradiation de signaux RF,
**caractérisé en ce que** chaque ensemble de modules TRX comprend en outre :
au moins un module TRX maître (2),
au moins un module TRX esclave (3), chacun d'eux étant conçu de façon à être commuté en position marche/arrêt par le dispositif de commande d'antenne active (5) en fonction d'exigences de charge de trafic,
l'agencement d'antenne active (7) étant configuré de sorte que, lorsqu'il est en utilisation, le ou chaque module TRX maître (2) est actif et irradie au moins une puissance de sortie minimale correspondante.

2. L'agencement d'antenne active (7) selon la Revendication 1, l'agencement d'antenne active (7) étant déployé pour une transmission 3G, où le ou chaque module TRX maître (2) est agencé, lorsque l'agencement d'antenne active (7) est en utilisation, de façon à irradier au moins les canaux communs, et où chaque module TRX esclave (3) est agencé, lorsqu'il est commuté en position marche, de façon à irradier au moins les mêmes canaux communs.

3. L'agencement d'antenne active (7) selon la Revendication 1, l'agencement d'antenne active (7) étant déployé pour une transmission 3G, où le ou chaque module TRX maître (2) est agencé, lorsque l'agencement d'antenne active (7) est en utilisation, de façon à irradier au moins les canaux communs, et où chaque module TRX esclave (3) est agencé, lorsqu'il est commuté en position marche, de façon à irradier uniquement des canaux dédiés.

4. L'agencement d'antenne active (7) selon l'une quelconque des Revendications précédentes, où la totalité des modules TRX maîtres (2) possèdent la même puissance de sortie maximale PM et la totalité des modules TRX esclaves (3) possèdent la même puissance de sortie maximale P_{S}.

5. L'agencement d'antenne active (7) selon l'une quelconque des Revendications 1 à 4, où chaque ensemble de modules TRX comprend :
un élément d'antenne (1) associé à un module correspondant des modules TRX maîtres (2), et
pour chaque module TRX esclave (3), un élément d'antenne (1') associé à chaque module TRX esclave correspondant (3),
l'agencement d'antenne active (7) étant configuré, lorsqu'il est en utilisation, de façon à :
- irradier le signal en sortie du module TRX maître (2) de chaque ensemble de modules TRX sur son élément d'antenne associé (1),
- lorsqu'un module TRX esclave (3) d'un ensemble de modules TRX est commuté en position arrêt, irradier le signal en sortie du module TRX maître (2) dudit ensemble de modules TRX sur l'élément d'antenne (1') associé audit module TRX esclave (3), ledit signal en sortie étant ajusté de manière appropriée de façon à maintenir le diagramme de rayonnement,
- lorsqu'un module TRX esclave (3) d'un ensemble de modules TRX est commuté en position marche, irradier son signal en sortie sur son élément d'antenne associé (1').

6. L'agencement d'antenne active (7) selon la Revendication 5, chaque module TRX maître comprenant :
- des éléments de commutation (60, 61, 64) destinés à acheminer de manière appropriée les signaux en sortie du module TRX maître (2) et des au moins un modules TRX esclaves (3), et
- pour chaque module TRX esclave (3), un déphaseur et un atténuateur variable (63) destinés à l'ajustement de l'atténuation et du déphasage du signal en sortie du module TRX maître (2),
lesdits éléments de commutation (60, 61, 64) et le déphaseur et l'atténuateur variable (63) étant commandés par le dispositif de commande d'antenne (5).

7. L'agencement d'antenne active (7) selon la Revendication 6, chaque module TRX maître comprenant en outre un diviseur (62) destiné à la division du signal en sortie du module TRX maître (2) de façon à alimenter son élément d'antenne associé (1) et également de façon à alimenter chaque élément d'antenne (1') associé à chaque module TRX esclave (3) par l'intermédiaire du déphaseur et de l'atténuateur variable (63) correspondants.

8. L'agencement d'antenne active (7) selon l'une quelconque des Revendications 1 à 4, où chaque ensemble de modules TRX comprend un élément d'antenne unique (1), l'agencement d'antenne active (7) étant configuré, lorsqu'il est en utilisation, de façon à :
- lorsque chaque module TRX esclave (3) d'un ensemble de modules TRX est commuté en position arrêt, irradier le signal en sortie du module TRX maître (2) dudit ensemble de modules TRX sur l'élément d'antenne (1) dudit ensemble de modules TRX,
- lorsqu'au moins un module TRX esclave (3) d'un ensemble de modules TRX est commuté en position marche, obtenir un signal combiné cohérent entre ledit au moins un module TRX esclave commuté en position marche (3) et le module TRX maître (2) dudit ensemble de modules TRX, et irradier ledit signal combiné sur l'élément d'antenne (1) dudit ensemble de modules TRX.

9. L'agencement d'antenne active (7) selon la Revendication 8, chaque module TRX maître comprenant un combineur cohérent (71) agencé de façon à obtenir le signal combiné cohérent et les éléments de commutation (70, 72) commandés par le dispositif de commande d'antenne active (5) de façon à adresser de manière appropriée les signaux RF intermédiaires à l'élément d'antenne associé (1).

10. L'agencement d'antenne active (7) selon l'une quelconque des Revendications 1 à 4, où chaque module TRX (2, 3) est agencé de façon à alimenter un élément d'antenne unique (1, 1'), le dispositif de commande d'antenne active (5) étant agencé de façon à ajuster de manière dynamique les poids et les paramètres de puissance des modules TRX maîtres (2) et esclaves (3).

11. Un site d'antenne active comprenant l'agencement d'antenne active (7) selon l'une quelconque des Revendications 1 à 10 et une unité de bande de base raccordée audit agencement d'antenne active (7).
